# EUROPÄISCHE PATENTANMELDUNG

(11) **EP 0 556 443 A1**
(43) Veröffentlichungstag der Anmeldung: **25.08.1993**
(21) Anmeldenummer: 92115083.5
(22) Anmeldetag: 03.09.1992
(51) Int. Cl.: B25B 5/14, B29C 63/22, E01F 15/00

(54) **Vorrichtung zum Ummanteln eines Elementes wie Pfostens**

(30) Priorität: 03.09.1991 DE 9110931 U
(71) Anmelder: Kramig, Gebhard H., D-63457 Hanau (DE)
(72) Erfinder: Kramig, Gebhard H., D-63457 Hanau (DE)
(74) Vertreter: Stoffregen, Hans-Herbert, Dr. Dipl.-Phys.

(57) **Zusammenfassung**

Um eine Ummantelung für einen Pfosten an diesem befestigen zu können, wird ein Werkzeug vorgeschlagen, das zwei zueinaner bewegliche Backen aufweist, die zumindest bereichsweise der Außengeometrie der Ummantelung angepaßt sind.

## Beschreibung

Die Erfindung bezieht sich auf eine Vorrichtung zum Ummanteln von Elementen wie Pfosten, Rohren, Trägern und anderen Hindernissen mit einer vorzugsweise aus Kunststoff und aus Halbschalen bestehenden Ummantelung, wobei die Halbschalen zum Ummanteln des Elementes über ineinandergreifende Vorsprünge bzw. Vertiefungen verbindbar sind.

Aus der EP-C 0 136 531 ist eine Ummantelung von Pfosten, Rohren, Trägern und anderen Hindernissen als Unfall- bzw. Rammschutz bekannt, die aus zwei Halbschalen aus Kunststoff bestellt, die über Vorsprünge und entsprechende Vertiefungen formschlüssig verbindbar sind, um das Element zu umgeben. Dabei ist die Verbindung derart fest, daß auch nach einem Aufprall ein Auseinanderplatzen nicht auftreten kann.

Um entsprechende Ummantelungen um die Elemente, insbesondere Pfosten von Leitplanken anzuordnen, werden die Halbschalen um die Pfosten gelegt und sodann durch Krafteinwirkung verbunden, indem die Vorsprünge in die Vertiefungen eingreifen. Dieses Montieren erfolgt von Hand und ist somit recht zeitaufwendig. Daneben besteht die Möglichkeit, daß die einwirkenden Kräfte zu groß oder zu klein sind, daß also die gewünschte Verbindung nicht hergestellt wird bzw. durch zu große Krafteinwirkung eine Beschädigung der Ummantelung erfolgt.

Der vorliegenden Erfindung liegt nunmehr das Problem zugrunde, eine Vorrichtung der eingangs genannten Art zur Verfügung zu stellen, mit der ein problemloses Ummanteln der Elemente wie insbesondere Pfosten mit der aus zwei Halbschalen bestehenden Ummantelung möglich ist, wobei die Kräfte definiert applizierbar sind.

Das Problem wird erfindungsgemäß im wesentlichen dadurch gelöst, daß die Vorrichtung zwei zueinander verschieb-/oder verschwenkbare Backen aufweist, von denen jede je eine Halbschale der Ummantelung bereichsweise umgibt, und daß über die Backen auf die Halbschalen zum Ummanteln des Elementes Kräfte einwirken. Dabei geht jede Backe vorzugsweise von einem Backenträger aus, wobei die Backenträger von einem zueinander verschieb-/oder verschwenkbarer Abschnitte aufweisen den Grundkörper ausgehen.

Die Abschnitte selbst sind Mittels einer z.B. pneumatisch oder elektrisch betätigbaren Betätigungseinrichtung zueinander verschieb-/oder verschwenkbar. Insbesondere sind die Abschnitte über einem Pneumatikzylinder entlang einer Linie zueinander verschiebbar, die senkrecht zur Längsachse des zu ummantelnden Elementes verläuft.

Es besteht aber auch die Möglichkeit, die Abschnitte mittels einer elektrisch betätigbaren Spindel zueinander verschiebbar auszubilden. Schließlich ist als weitere Antriebsmöglichkeit vorgesehen daß die Abschnitte über einen Ritzel und eine dieses aufnehmende Zahnführungsstange zur Führungsstange zueinander verschiebbar sind.

Um die Vorrichtung problemlos handhaben zu können, gehen von dem Grundkörper, und zwar von den Abschnitten, Griffe aus.

Die die Halbschalen erfassenden Backen sind flächig ausgebildet und zumindest abschnittsweise der Außenform der Halbschalen angepaßt. Um ein und dieselbe Vorrichtung für verschiedene Halbschalengeometrien verwenden zu können bzw. abgenutzte oder beschädigte Backen zu erneuern, sind diese austauschbar mit den Backenträgern verbunden.

Um ein sicheres Erfassen der Halbschalen zu ermöglichen, ist nach einem weiteren Vorschlag der Erfindung vorgesehen, daß die Backen mit einem rutschhemmenden Belag versehen sind.

Weitere Einzelheiten, Vorteile und Merkmale der Erfindung ergeben sich nicht nur aus den Ansprüchen, den in diesen zu entnehmenden Merkmale - für sich und/oder in Kombination -, sondern auch aus der nachfolgenden Beschreibung eines der Zeichnung zu entnehmenden bevorzugten Ausführungsbeispiels.

Es zeigen:
- Fig. 1: einen Ausschnitt aus einem mit einer Ummantelung zu verkleidenden Pfosten,
- Fig. 2: eine Vorrichtung zum Verkleiden eines Elementes wie Pfostens mit der Ummantelung gemäß Fig. 1,
- Fig. 3: die Vorrichtung nach Fig. 2, jedoch ohne automatische Betätigungseinrichtung,
- Fig. 4: eine Ansicht der Fig. 2 in Richtung des Pfeils A und
- Fig. 5: eine Ansicht der Vorrichtung gemäß Fig. 2 in Richtung des Pfeils B.

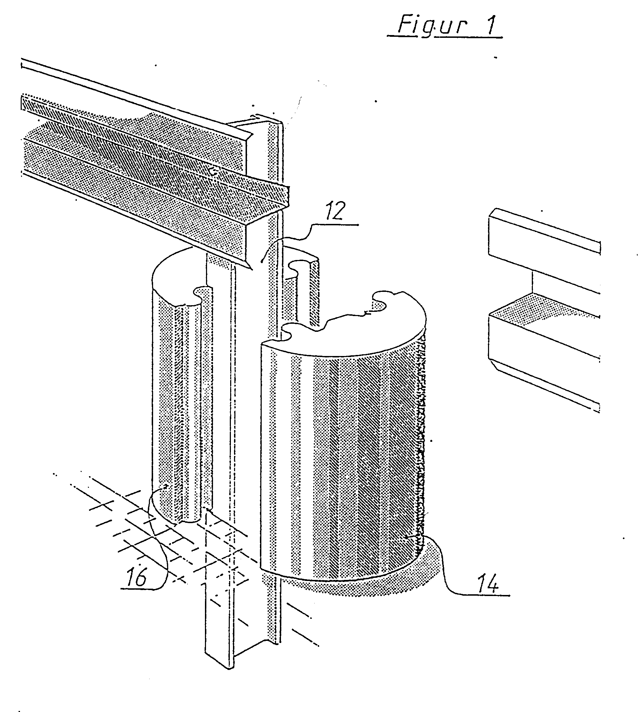

In den Figuren, in denen gleiche Elemente mit gleichen Bezugszeichen versehen sind, ist eine Vorrichtung (10) zum Ummanteln eines Elementes wie Pfostens (12) mit einer Ummantelung dargestellt, die aus Halbschalen (14) und (16) besteht (Fig. 1). Bei der Ummantelung handelt es sich um eine solche, wie sie z. B. in der EP-C 0 136 531 beschrieben ist. Damit der Pfosten (12) mit den Halbschalen (14) und (16) sicher verkleidet werden kann, gehen von den vorzugsweise identisch ausgebildeten Halbschalen Vorsprünge bzw. Ausnehmungen auf, die formschlüssig zum Ummanteln des Pfostens (12) ineinandereingreifen.

Um auf die Halbschalen (14), (16) die erforderlichen Kräfte einwirken zu lassen, damit die Vorsprünge in die Ausnehmungen eingreifen, kann die Vorrichtung (10) benutzt werden, die quasi ein automatisches Ummanteln ermöglicht.

Wesentliche Bestandteile der Vorrichtung (10) ist ein Basiskörper (18), der aus zwei in ihrer Längsrichtung verschiebbaren Abschnitten (20), (22) besteht. Von den Abschnitten (20), (22) gehen schenkelförmige Vorsprünge (24), (26), die als Backenträger zu bezeichnen sind, aus.

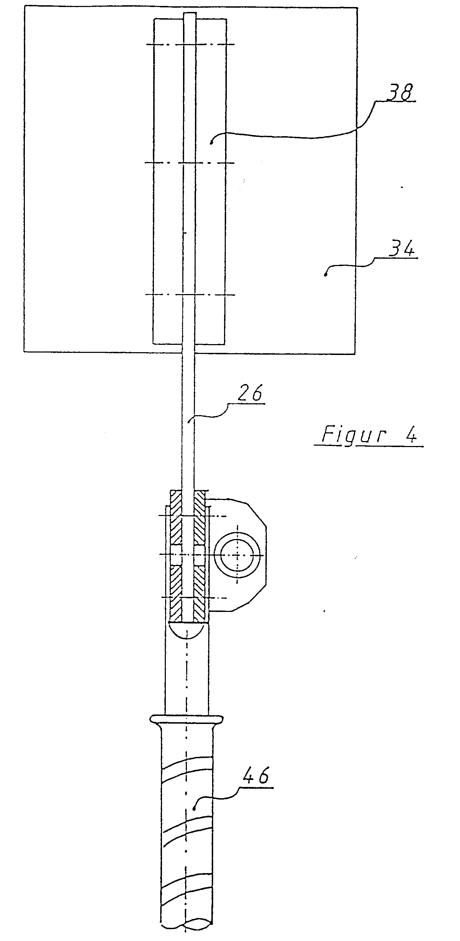

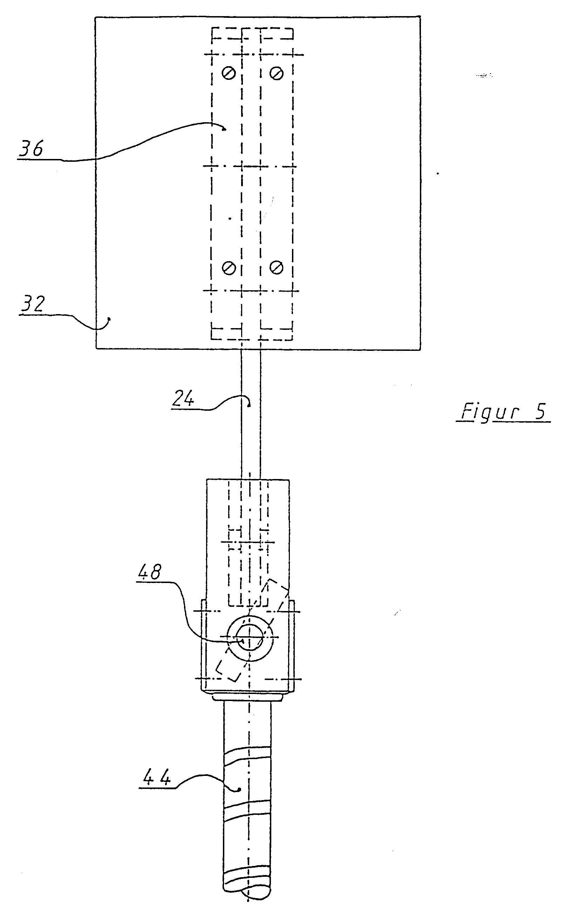

Die Backenträger (24), (26) weisen konkavförmige Abschnitte (28), (30) auf, in denen flächige Backenelemente (32),(34) austauschbar befestigbar sind. Diese Backenelemente (32), (34) sind insbesondere in den Fig. 4 und 5 erkennbar Die Fig. 4 und 5 verdeutlichen auch, daß die Backenträger (24), (26) stabförmig ausgebildet sind und z. B. aus Flachmaterial wie Leichtmetall bestehen, die zum Befestigen der Backenelemente (32), (34) streifenförmige Erweiterungen (36), (38) aufweisen, an denen die die Halbschalen (14), (16) erfassenden Element (32), (34) befestigt wie verschraubt sind.

Die die Halbschalen (14), (16) erfassenden Flächen der Backenelementen (32), (34) können mit einem rutschhemmenden Belag versehen sein, um so ein sicheres Erfassen ersterer sicherzustellen.

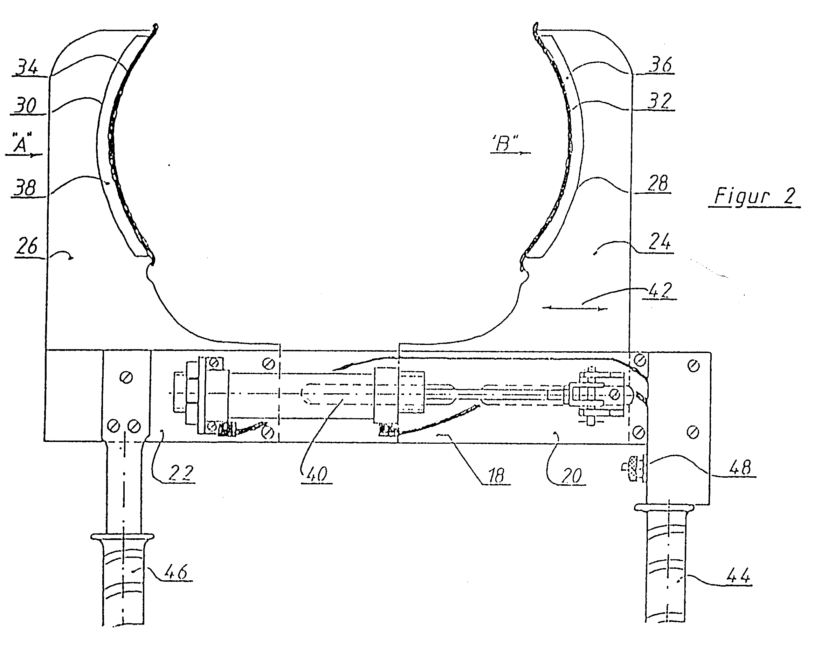

Damit die Halbschalen (14), (16) zum Ummanteln des Pfostens (12) fest miteinander verbunden werden können, wobei definierte Kräfte aufgebracht werden sollen, können die Abschnitte (20) (22) im Ausführungsbeispiel der Fig. 2 über einen Pneumatikzylinder (40) kontrolliert aufeinanderzu bewegt werden. Hierzu bewegen sich die Abschnitte (20), (22) in etwa teleskopartig zueinander.

Als weitere Betätigungseinrichtung, um die Abschnitte (20), (22) und damit die Backenelemente (32), (34) aufeinanderzu zu bewegen, um also die zwischen diesen vorhandenen Halbschalen (14), (16) mit einem Druck zu beaufschlagen, daß die Vorsprünge und Ausnehmungen formschlüssig ineinandergreifen, damit der Pfosten (12) sicher ummantelt ist, kann auch ein Elektromotor, der z. B. eine Spindel antreibt, oder ein Ritzel, der von einer Führungsstange aufgenommen ist, benutzt werden.

Es ist grundsätzlich und bevorzugterweise vorgesehen, daß die Abschnitt (20), (22) entlang ihrer Längsrichtung, also entlang des Doppelpfeils (42), aufeinanderzu bewegt werden. Es besteht selbstverständlich auch die Möglichkeit, daß ein Verschwenken erfolgt, so daß die Backenelemente (32), (34) eine Art Scherenbewegung ausüben. Wesentlich ist jedoch, daß die Backenelemente (32), (34) zumindest bereichsweise die Außenflächen der Halbschalen (14), (16) erfassen, und sodann durch aufeinanderzu bewegen der Backenelemente (32) (34) den gewünschten Druck in die Halbschalen zum Verrasten dieser einzuleiten.

Von den Abschnitten (20), (22) gehen Handhaben wie Griffe (44), (46) aus, von denen der Handgriff (44) einen Betätigungsschalter (48) aufweisen kann, über den der mit der in Fig. 2 dargestellten Pneumatikzylinder (40) aktiviert werden kann.

Um ein einwandfreies Verschieben der Abschnitte (20), (22) zueinander zu gewährleisten, sind an einem der Abschnitte (20) bzw. (22) in dessen Längsrichtung verlaufende Führungsschlitze vorgesehen, in die von dem anderen Abschnitt (22) bzw. (20) ausgehenden Vorsprünge eingreifen.

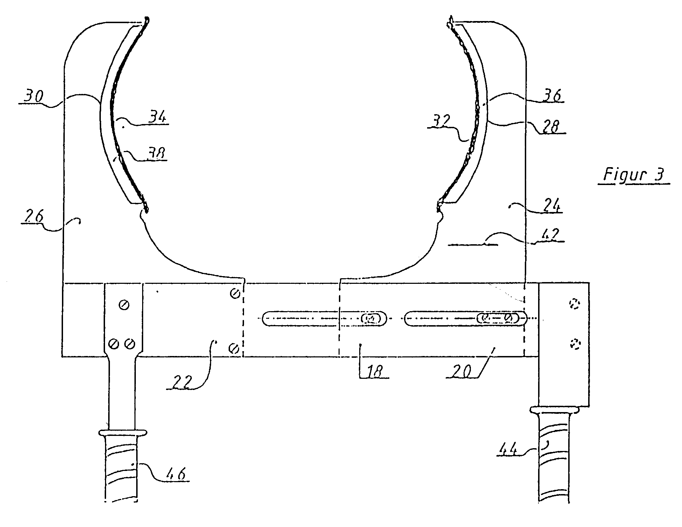

Die Ausführungsform der Fig. 3 unterscheidet sich von der der Fig. 2 dahingehend, daß eine reine Handbetätigung möglich ist, d.h., daß die Abschnitte (20), (22) nicht antreibbar sind. Vielmehr ist das Verschieben dieser allein durch manuelle Krafteinwirkung möglich. Mit einer entsprechenden "Handvorrichtung" lassen sich selbstverständlich die Halbschalen (14), (16) ebenfalls im gewünschten Umfang fest um einen Pfosten (12) oder ein ähnliches Element anordnen. Der Bewegung der Abschnitte (20), (22) aufeinander zu kann ein nicht dargestelltes Fecherelement entgegenwirken.

## Patentansprüche

1. Vorrichtung zum Verkleiden von Elementen wie Pfosten, Rohren, Trägern und anderen Hindernissen mit einer vorzugsweise aus Kunststoffschaum und aus zwei Halbschalen bestehenden Ummantelung, wobei die Halbschalen zum Ummanteln des Elements überineinandergreifende Vorsprünge bzw. Vertiefungen verbindbar sind,
**dadurch gekennzeichnet,**
daß die Vorrichtung (10) zwei zueinander verschieb- oder verschwenkbare Backen (32, 34) aufweist, von denen jede je eine Halbschale der Ummantelung (14, 16) bereichsweise umgibt, und das über die Backen auf die Halbschalen zum Ummanteln des Elementes Kräfte einwirken.

2. Vorrichtung nach Anspruch 1,
**dadurch gekennzeichnet,**
daß jede Backe (32, 34) von einem Backenträger (24, 26, 36, 38) ausgeht und daß die Backenträger von einem zueinander verschieb- oder verschwenkbare Abschnitte (20, 22) aufweisenden Grundkörper (18) ausgehen.

3. Vorrichtung nach Anspruch 2,
**dadurch gekennzeichnet**,
daß die Abschnitte (20, 22) mittels einer pneumatisch oder elektrisch betätigbaren Betätigungseinrichtung zueinander verschieb- oder verschwenkbar sind.

4. Vorrichtung nach Anspruch 3,
**dadurch gekennzeichnet,**
daß die Abschnitte (20, 22) über einen Pneumatikzylinder (14) zueinander verschiebbar sind.

5. Vorrichtung nach Anspruch 3,
**dadurch gekennzeichnet,**
daß die Abschnitte mittels einer elektrisch betätigbaren Spindel zueinander verschiebbar sind.

6. Vorrichtung nach Anspruch 3,
d**adurch gekennzeichnet,**
daß die Abschnitte über ein Ritzel und über eine dieses aufnehmende Zahnführungsstange zueinander verschiebbar sind.

7. Vorrichtung nach zumindest einem der vorhergehenden Ansprüchen,
**dadurch gekennzeichnet,**
daß von den Abschnitten (20, 22) Handhaben wie Griffe (44, 46) ausgehen.

8. Vorrichtung nach zumindest einem der vorhergehenden Ansprüche,
**dadurch gekennzeichnet,**
daß die Backen (32, 34) flächige, abschnittsweise der Außenform der Halbschalen (14, 16) angepaßte Elemente sind.

9. Vorrichtung nach Anspruch 8,
**dadurch gekennzeichnet,**
daß die Elemente (32, 34) austauschbar mit den Backenträgern (24, 26, 36, 38) verbunden sind.

10. Vorrichtung nach Anspruch 8,
**dadurch gekennzeichnet,**
daß die Elemente (32, 34) mit einem rutschhemmenden Belag versehen sind.
